(19) Europäisches Patentamt
European Patent Office
Office européen des brevets

(11) Veröffentlichungsnummer: **0 382 004**
**A2**

(12) # EUROPÄISCHE PATENTANMELDUNG

(21) Anmeldenummer: **90101433.2**

(22) Anmeldetag: **25.01.90**

(51) Int. Cl.$^5$: **C08L 83/10, C08G 64/18, C08L 27/18**

(30) Priorität: **07.02.89 DE 3903547**

(43) Veröffentlichungstag der Anmeldung:
**16.08.90 Patentblatt 90/33**

(84) Benannte Vertragsstaaten:
**DE ES FR GB IT NL**

(71) Anmelder: **BAYER AG**

**D-5090 Leverkusen 1 Bayerwerk(DE)**

(72) Erfinder: **Grigo, Ulrich, Dr.**
**Michelsheide 9**
**D-4152 Kempen 3(DE)**
Erfinder: **Nouvertné, Werner, Dr.**
**Burgstrasse 17b**
**D-4150 Krefeld(DE)**
Erfinder: **Gielen, Franz-Josef, Dipl.-Ing.**
**Niersweg 29**
**D-4150 Krefeld(DE)**
Erfinder: **Tacke, Peter, Dr.**
**Brandenburger Strasse 12**
**D-4150 Krefeld 12(DE)**

(54) **Mischungen aus thermoplastischen Polydiorganosiloxan-Polycarbonat-Blockcopolymeren mit Polytetrafluorethylenen.**

(57) Gegenstand der vorliegenden Erfindung sind Mischungen bestehend aus Polydiorganosiloxan-Polycarbonat-Blockcopolymeren und Polytetrafluorethylenpolymerisaten sowie gegebenenfalls wirksamen Mengen an Stabilisatoren, Pigmenten, Fließmitteln, Entformungsmitteln und/oder Verstärkungsstoffen sowie ein Verfahren zur Herstellung dieser Mischungen.

EP 0 382 004 A2

# Mischungen aus thermoplastischen Polydiorganosiloxan-Polycarbonat-Blockcopolymeren mit Polytetrafluorethylenen

Gegenstand der vorliegenden Erfindung sind Mischungen bestehend aus

A) 80 Gew.-% - 99 Gew.-%, vorzugsweise 82 Gew.-% - 97 Gew.-% an thermoplastischen Polydiorganosiloxan-Polycarbonat-Blockcopolymeren, mit mittlerem Molekulargewicht $\overline{M}w$ von 10.000 bis 200.000 und mit einem Gehalt an aromatischen Carbonatstruktureinheiten zwischen 70 Gew.-% und 99 Gew.-% und einem Gehalt an Diorganosiloxy-Einheiten zwischen 30 Gew.-% und 1 Gew.-%, wobei die Blockcopolymeren, ausgehend von $\alpha,\omega$-Bishydroxyaryloxypolydiorganosiloxanen, mit einem Polymerisationsgrad $P_\pi$ von 5 bis 100 hergestellt werden und

B) 20 Gew.-% bis 1 Gew.-%, vorzugsweise 18 Gew.-% bis 3 Gew.-% an Polytetrafluorethylenpolymerisaten mit einem mittleren Teilchendurchmesser von 0,1 $\mu$m bis 700 $\mu$m, vorzugsweise von 0,2 $\mu$m bis 600 $\mu$m und einem $\overline{M}_n$ (Zahlenmittelmolekulargewicht) von 4.000 bis 900.000, vorzugsweise von 50.000 bis 800.000, sowie gegebenenfalls wirksamen Mengen an Stabilisatoren, Pigmenten, Fließmitteln, Entformungsmitteln und/oder Verstärkungsstoffen, wobei die Summe der Gewichtsprozente der Komponenten A) und B) jeweils 100 Gew.-% ist.

Das bevorzugte $\overline{M}w$ der Blockcopolymeren liegt zwischen 20.000 und 80.000; der bevorzugte Gehalt an Carbonatstruktureinheiten liegt zwischen 80 Gew.-% und 97 Gew.-%, der bevorzugte Gehalt an Polydiorganosiloxan-Blöcken liegt zwischen 20 Gew.-% und 3 Gew.-% und der bevorzugte Polymerisationsgrad der Polydiorganosiloxane-Blöcke liegt zwischen 5 und 80.

Die Komponente A kann auch eine Mischung aus Polydiorgano-Polycarbonat-Blockcopolymeren mit anderen siloxanfreien, aromatischen, thermoplastischen Polycarbonaten sein, wobei der Gesamtgehalt an Diorganosiloxy-Einheiten in diesen Mischungen wieder zwischen 1 Gew.-% und 30 Gew.-%, vorzugsweise zwischen 3 Gew.-% und 20 Gew.-% liegt.

Aus der US-PS 3 005 795 sind Abmischungen von Polycarbonaten mit Polytetrafluoreethylenen in Mengen von 0,05 % bis 20 % bekannt. Sie besitzen ein besonders günstiges Fließverhalten in der Schmelze, zeigen jedoch noch die für Polycarbonate charakteristische Neigung zu Spannungsrißkorrosionen bei Einwirkung von Treibstoffen für Otto-Motoren und besitzen normale Steifigkeit.

Aus der GB-PS 93 89 31 sind Gleitlager aus gefüllten Polycarbonaten bekannt. Als Füllstoffe können unter anderem Kunststoffe, als bevorzugte Kunststoffe Polytetrafluorethylen verwendet werden. (Seite 1, Zeilen 50-56 der GB-PS). Die Menge an Füllstoff kann bis zu 40 Vol.% des Polycarbonats betragen.

Aus der DE-OS 1 494 288 ist ein Verfahren zur Herstellung von schmierungslosen Gleitlagern bekannt. Hierbei werden thermoplastische Kunststoffe mit 10 bis 36 Gew.-% an Polytetrafluorethylenfasern versetzt. Als thermoplastische Kunststoffe sind auch Polycarbonate geeignet.

Aus dem US-Patent 3 294 871 ist ein Verfahren zur Herstellung von Polytetrafluorethylen-haltigen Thermoplasten bekannt, wobei der Gehalt an Polytetrafluorethylen 10 Gew.-% bis 20 Gew.-% beträgt. Als Thermoplasten sind auch Polycarbonate geeignet.

Aus den US-Patenten Nr. 3 651 174 und 3 742 085 sind thermostabile Polycarbonate bekannt, die Mischungen von Polytetrafluorethylenen und Organosiloxan-polymere enthalten.

Aus Polymer Letters Edition, Vol. 12, Seiten 247-252, (1974) ist der Einfluß von kurzen Siloxanblöcken in Polycarbonat-Siloxan-Blockpolymeren beschrieben. Daraus ist ersichtlich, daß Siloxanblöcke die Tieftemperaturzähigkeit des Polycarbonats verbessern.

Bekannt sind auch flammwidrige Formmassen, die Polysiloxan-Polycarbonat-Blockcopolymere und Polytetrafluorethylene enthalten. (Siehe beispielsweise EP-OS 0 174 493, DOS 3 615 768, DOS 3 617 511, DOS 3 628 904 und DOS 3 629 546).

Derartige Mischungen betreffen jedoch Formmassen mit Brandschutzausrüstung, die auch noch erhebliche Mengen von Copolymerisaten und Phosphorsäureestern enthalten.

Gegenüber dem angezogenen Stand der Technik haben die erfindungsgemäßen Mischungen eine wesentlich größere Steifigkeit.

Die erfindungsgemäß verwendbaren Polydiorganosiloxan-Polycarbonat-Blockcopolymeren gemäß Komponente A) sind solche auf Basis der Diphenole der Formel (I) und der Formel (I a)

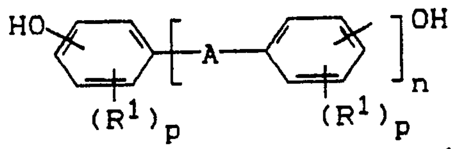

(I)

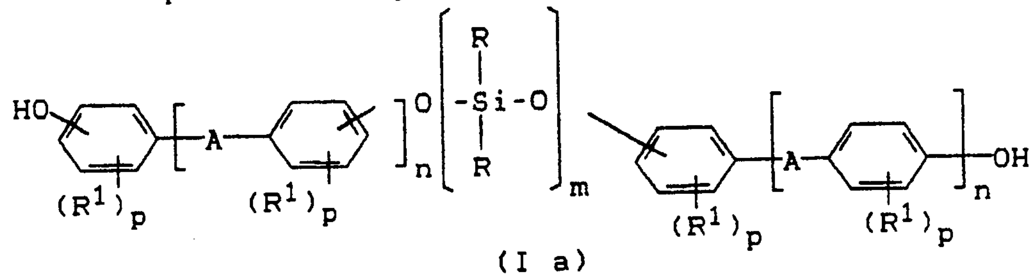

(I a)

worin $R^1$ gleich oder verschieden sind und Cl, Br oder $CH_3$ sind, p Null, 1 oder 2 ist, A eine Einfachbindung $C_1$-$C_5$-Alkylen, ein $C_2$-$C_5$-Alkyliden, ein $C_5$-$C_6$-Cycloalkyliden, -S- oder $-SO_2-$, n = 1 oder Null ist, die R gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$ und m eine ganze Zahl zwischen 5 und 100, vorzugsweise zwischen 5 und 80 ist, und wobei der Gewichtsanteil an Diphenolen der Formel (I a) in den Copolycarbonaten jeweils so bemessen ist, daß der Gehalt an Diorganosiloxy-Einheiten

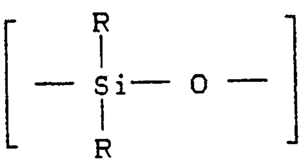

im Copolycarbonat, das für Komponente A eingesetzt wird, zwischen 1 und 30 Gew.-%, vorzugsweise zwischen 3 und 20 Gew.-% beträgt.

Der Gehalt an aromatischen Carbonatstruktureinheiten

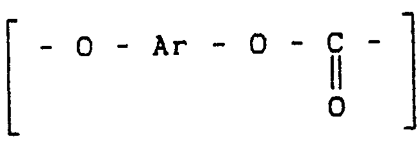

entspricht der komplementären Menge von 99 bis 70 Gew.-%, vorzugsweise von 97 bis 80 Gew.-%.

Andere, siloxanfreie thermoplastische, aromatische Polycarbonate sind vorzugsweise solche, die als Diphenole nur solche der Formel (I) eingebaut enthalten.

In den Fällen, in denen die Komponente (A) ein Gemisch aus siloxanhaltigen Polycarbonaten und siloxanfreien Polycarbonaten ist, können die siloxanhaltigen Polycarbonate auch einen Gehalt an Diorganosiloxy-Einheiten von mehr als 30 Gew.-% enthalten, sofern durch die Abmischung mit den siloxanfreien Polycarbonaten der Gehalt im Polycarbonatgemisch wiederum zwischen 1 und 30 Gew.-% liegt.

Die Diphenole der Formel (I) sind entweder literaturbekannt oder nach literaturbekannten Verfahren herstellbar.

Polydiorganosiloxane mit Hydroxyaryloxy-Endgruppen gemäß Formel (I a) sind ebenfalls bekannt (siehe z.B. US-Patent 3 419 634) bzw. nach literaturbekannten Verfahren herstellbar.

Die Herstellung der erfindungsgemäß geeigneten Polydiorganosiloxan-Polycarbonat-Blockcopolymeren gemäß Komponente A) ist literaturbekannt und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. [Bezüglich polydiorganosiloxanhaltigen Polycarbonaten, siehe z. B. DE-OS 3 334 782 (Le A 22 594)].

Geeignete Kettenabbrecher sind z. B. Phenol oder p-tert.-Butylphenol, aber auch langkettige Alkylphenole wie 4-(1,3-Tetramethyl-butyl)phenol gemäß DE-OS 2 842 005 (Le A 19 006) oder Monoalkylphenole oder Dialkylphenole mit insgesamt 8 bis 20 C-Atomen in den Alkylsubstituenten gemäß deutscher Patentanmeldung P 3 506 472.2 (Le A 23 654), wie z B. p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol.-%, bezogen auf die Summe der jeweils eingesetzten Diphenole (II) und (II a).

Die erfindungsgemäß geeigneten Polycarbonate gemäß Komponente A) haben mittlere Gewichtsmittelmolekulargewichte ( $\overline{M}_w$, gemessen z. B. durch Ultrazentrifugation oder Streulichtmessung) von 10.000 bis 200.000, vorzugsweise von von 20.000 bis 80.000.

Siloxanfreie thermoplastische, aromatische Polycarbonate sind ebenfalls literaturbekannt.

Geeignete Diphenole für die Herstellung der Polycarbonate sind beispielsweise Hydrochinon, Resorcin, Dihydroxydiphenyle, Bis-(hydroxyphenyl)-alkane, Bis-(hydroxyphenyl)-cycloalkane, Bis-(Hydroxyphenyl)-sulfide, Bis-(hydroxyphenyl)-ether, Bis-(hydroxyphenyl)-ketone, Bis(-hydroxyphenyl)-sulfoxide, Bis-(hydroxyphenyl)-sul fone und α,α′-Bis-(hydroxyphenyl)-diisopropylbenzole sowie deren kernalkylierte und kernhalogenierte Verbindungen. Diese und weitere Diphenole sind z. B. in den US-Patentschriften 3 028 365, 3 272 601, 3 148 172, 3 062 781, 2 991 273, 3 271 367, 2 999 835, 2 970 131 und 2 999 846, in den deutschen Offenlegungsschriften 1 570 703, 2 063 050, 2 063 052, 2 211 956, 2 211 957, der französischen Patentschrift 1 561 518 und in der Monographie von H. Schnell, "Chemistry and Physics of Polycarbonates", Interscience Publishers, New York, beschrieben.

Bevorzugte Diphenole sind z. B.
4,4′-Dihydroxydiphenyl, 2,4-Bis-(4-hydroxyphenyl)-2-methylbutan, α,α′-Bis-(4-hydroxyphenyl)-p-diisopropylbenzol, 2,2-Bis-(3-methyl-4-hydroxyphenyl)-propan, 2,2-Bis(3-chlor-4-hydroxyphenyl)-propan, Bis-(3,5-dimethyl-4-hydroxyphenyl-methan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan und α,α′-Bis-(3,5-dimethyl-4-hydroxyphenyl)-p-diisopropylbenzol.

Besonders bevorzugte Diphenole sind z. B.
2,2-Bis-(4-hydroxyphenyl)-propan (Bisphenol A), 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete Diphenole der Formel (I a) sind solche, in denen R Methyl, Ethyl, Propyl, n-Butyl, tert.-Butyl und Phenyl ist.

Bevorzugte Diphenole der Formel (Ia) sind die der Formel (I b)

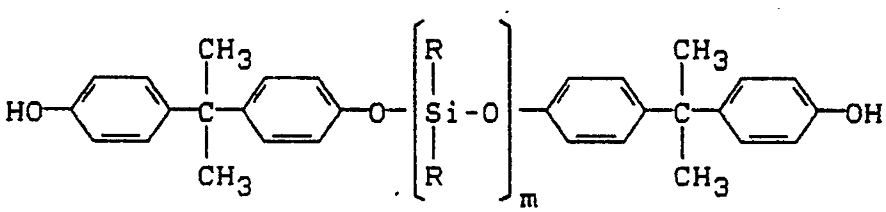

(I b)

worin die R's gleich sind und die vorstehend genannte Bedeutung haben, also Methyl etc. und Phenyl bedeuten und m wiederum um eine ganze Zahl zwischen 5 und 100, vorzugsweise zwischen 20 und 80 ist.

Die erfindungsgemäß geeigneten siloxanhaltigen und siloxanfreien Polycarbonate gemäß Komponente A) können in bekannter Weise verzweigt sein, und zwar vorzugsweise durch den Einbau von 0,05 bis 2,0 Mol.-%, bezogen auf die Summe der eingesetzten Diphenole, an drei- oder mehr als dreifunktionellen Verbindungen, z. B. solchen mit drei oder mehr als drei phenolischen OH-Gruppen (siehe beispielsweise DE-OS 33 47 071 (Le A 22 802)).

Bevorzugte Polydiorganosiloxan-Polycarbonat-Blockcopolymere sind Copolycarbonate der Diphenole der Formel (I) mit Diphenolen der Formel (I a).

Die erfindungsgemäß geeigneten Polydiorganosiloxan-Polycarbonate-Blockpolymeren lassen sich auch durch ihre relativen Lösungsviskositäten von 1,16 bis 1,5 charakterisieren, wobei $\eta_{rel}$ in $CH_2Cl_2$ bei 25° C und einer Konzentration von 0,5 g pro 100 ml Lösung gemessen ist.

Die Teilchenform der erfindungsgemäß geeigneten Polytetrafluorethylene kann rund, faserförmig, jedoch auch unregelmäßig sein.

Die Herstellung, Verarbeitung, Eigenschaften von Polytetrafluorethylen (PTFE) sind beispielsweise beschrieben in Ullmanns Encyklopädie der technischen Chemie, 4. Auflage, Band 19, S. 89 f, Verlag

Chemie, Weinheim, 1980.

Über Polytetrafluorethylene informieren weiterhin die Druckschriften Kunststoffe Hoechst, "Hostaflon", Ausgabe Juli 1984; "Teflon" von DuPont de Nemours, Ausgabe Juni 1987.

Die Herstellung der erfindungsgemäßen Mischungen aus den Komponenten A) und B) kann in üblichen Mischaggregaten in der Schmelze erfolgen. Als solche sind besonders Extruder und Kneter zu nennen. Die Bedingungen bezüglich Temperatur und Druck sind die üblichen für die Abmischung von Thermoplasten.

Eine besondere Möglichkeit der Abmischung besteht in der Synthese der Polydiorganosiloxan-Polycarbonat-Blockcopolymeren in Anwesenheit der abzumischenden Menge an Polytetrafluorethylen gemäß Komponente B) und der daran anschließenden üblichen Aufarbeitung und Isolierung der Komponente A) aus dem Reaktionsgemisch, oder in der Zudosierung des Polytetrafluorethylens in der abzumischenden Menge zu einer Lösung des Blockpolymeren in üblichen Lösungsmitteln, wie $CH_2Cl_2$, inniger Vermischung und anschließenden Fällung des Gemisches aus A) und B). Ein geeignetes Fällmittel ist Aceton. Auch Methanol ist anwendbar.

Gegenstand der vorliegenden Erfindung ist somit auch ein Verfahren zur Herstellung der erfindungsgemäßen Mischungen bestehend aus den Komponenten A) und B), das dadurch gekennzeichnet ist, daß man entweder die Komponenten A) und B) in der abzumischenden Menge in üblichen Mischaggregaten über die Schmelze der Komponente A) bei üblichen Temperaturen und Drucken vermischt und isoliert, oder die Komponente A) in Anwesenheit der abzumischenden Menge an Komponente B) synthetisiert und dann anschließend die Komponente A) in üblicher Weise aufarbeitet und isoliert, oder die Komponente B) zu der abzumischenden Menge einer Lösung der Komponente A) in üblichen Lösungsmitteln zudosiert, innig vermischt und anschließend das Gemisch aus A) und B) ausfällt.

Mit der Vermischung der Komponenten A) und B) kann die Einarbeitung der für die Polycarbonate üblichen Stabilisatoren, Pigmente, Fließmittel, Entformungsmittel und Verstärkungsstoffe in den üblichen Mengen erfolgen.

Geeignete Additive sind beispielsweise Glasfasern, Kohlenstoff-Fasern von organischen oder anorganischen Polymeren, Calciumcarbonat, Talkum, Kieselgel, Quarzmehl, Fettsäureestern, Phosphitstabilisatoren, Ruß und $TiO_2$.

Gegenstand der vorliegenden Erfindung ist somit auch ein Verfahren zur Herstellung der erfindungsgemäßen Mischungen bestehend aus A) und B) und mindestens einem Zusatz, ausgewählt aus der Gruppe der Stabilisatoren, Pigmente, Fließmittel, Entformungsmittel und Verstärkungssstoffe, dadurch gekennzeichnet, daß man diese in die erfindungsgemäße Vermischung der Komponente A) mit B) einbezieht.

Die Verarbeitung der erfindungsgemäßen Formmassen zu Formteilen, Halbzeug, und Folien, kann auf den üblichen Verarbeitungsmaschinen, wie Spritzguß- und Extrusionsanlagen erfolgen.

Die erfindungsgemäßen Mischungen finden als Formmassen bzw. Formteile Einsatz im Maschinenbau.

Beispiele:

Die Zusammensetzungen der hergestellten erfindungsgemäßen Mischungen sowie ihre Eigenschaften sind in Tabelle 1 zusammengefaßt. Die Mischungen wurden in einem Doppelschneckenextruder Typ ZSK 32 der Firma Werner und Pfleiderer compoundiert.

Zur Herstellung der erfindungsgemäßen Formmassen wurden die folgenden Siloxan-Polycarbonat-Blockcopolymeren (abgekürzt SiCoPC) hergestellt:

SiCoPC I: Ca. 10 Gew.-% Siloxanblöcke in Polycarbonat

Gemäß dem Beispiel 2 a von DOS 3 334 782 werden α,ω-Bis-hydroxy-aryloxy-polysiloxane hergestellt: In ein Gefäß, das mit Kühler, Trockenrohr, Tropftrichter, Rührer und Destillationsbrücke mit Vorlage versehen ist, gibt man 1140 (5 Mol) Gew.-Teile Bisphenol A und 22400 Gew.-Teile Chlorbenzol. Unter Rückfluß und Rühren wird innerhalb 15 Minuten eine Lösung von 3068 (1 Mol) Gew.-Teilen α,ω-Bisacetoxypolydimethylsiloxan $P_n$ = 40, in 5600 Gew.-Teilen Chlorbenzol zugegeben. Anschließend wird etwa ein Drittel der Lösemittelmenge abdestilliert, wobei die bei der Reaktion entstandene Essigsäure als azeotropes Gemisch mit dem Chlorbenzol übergeht. Ausbeute: 97 % der Theorie.

Hieraus erfolgte die Herstellung des SiCoPC gemäß Beispiel 3 von DOS 3 334 782:

Der zehnte Teil der Lösung aus Beispiel 2a wird in einem Reaktionskolben, der mit Rührer, Phosgeneinlaßrohr, Rückflußkühler, Innenthermometer und Tropftrichter ausgerüstet ist, mit 2280 Gew-Teilen Bisphenol A, 1010 Gew.-Teilen Natriumhydroxid, 31100 Gew.-Teilen Wasser, 13500 Gew.-Teilen Dichlormethan und 10700 Gew.-Teilen Chlorbenzol und 25 Gew.-Teilen Phenol versetzt. Bei Raumtemperatur werden 1646 Gew.-Teile Phosgen eingeleitet, wobei der pH durch Zugabe 45 %iger Natronlauge zwischen 12 und 13 gehalten wird. Das Einleiten nimmt ca. eine Stunde in Anspruch. Danach werden 8 Gew.-Teile Triethylamin zugesetzt und weitere 45 Minuten bei pH 12 bis 13 nachgerührt. Das Cokondensat wird nach für Polycarbonat gängigen Methoden aufgearbeitet.

Das erhaltene Material besaß die relative Lösungsviskosität ($\eta_{rel}$) 1,288 (gemessen in Dichlormethan bei 25 °C und einer Konzentration von 0,5 g SiCoPC) in 100 ml Lösung). Das Material enthielt 9,9 Gew.-% Siloxan.

SiCoPC II: Granulatgemisch aus a) 20 Gew.-% SiCoPC auf Basis 50 Gew.-% Siloxanblöcken und 50 Gew.-% Bisphenol-A-Homopolycarbonat und b) 80 Gew.-% Bisphenol-A-Homopolycarbonat ($\eta_{rel}$ dieses letzteren PC-Anteiles 1.293).

Die Herstellung des SiCoPC mit einem Gehalt von 50 Gew.-% Siloxan-Blocken erfolgte folgendermaßen:

Der Lösung von Beispiel 2 a der DOS 3 334 782, enthaltend 2 966,4 g Siloxan, wurden 1 521,6 g Bisphenol A, 9,5 g Phenol als Kettenabbrecher, 1 000 g NaOH als 45 %ige wäßrige Lösung, 35 l Wasser sowie je 10 l Dichlormethan und Chlorbenzol zugesetzt und unter kräftigem Rühren bei Raumtemperatur 1 600 g Phosgen eingeleitet, der pH-Wert der wäßrigen Phase mit NaOH zwischen 12 und 13 gehalten. Die Einleitung des Phosgens dauerte ca. 1 Stunde. Anschließend wurden 9 g N-Ethylpiperidin zugegeben und noch 45 min. bei pH 12-13 weitergerührt. Die Aufarbeitung des Ansatzes erfolgte in der für Polycarbonat üblichen Weise zum Schluß durch Extruderentgasung. Das erhaltene Cokondensat besaß eine relative Lösungsviskosität von 1,297, gemessen im $CH_2Cl_2$ bei einer Konzentration von 0,5 g Produkt in 100 ml Lösung.

Die Abmischung mit dem Bisphenol-A-Homopolycarbonat im Verhältnis 20 zu 80 erfolgte in einem Taumelmischer.

Als Polycarbonat (PC in der Tabelle) wurde ein Bisphenol-A-Homopolycarbonat der relativen Lösungsviskosität 1,287 verwendet.

Als feinteiliges Polytetrafluorethylen (PTFE) wurden folgende Qualitäten der Hoechst AG eingesetzt: Hostaflon TF 2027 (I) und 1740 (II). Die mittlere Teilchengröße lag bei ca. 550 bzw. 40 µm; die Dichten lagen bei 2,1 bis 2,2 g/cm³ .

Weiterhin wurde Teflon 30-N (III) von DuPont mit mittlerer Teilchengröße 0,23 µm verwendet, dessen Dichte zwischen 2,1 und 2,2 g/cm³ liegt.

Die Herstellung der Gemische gemäß den Beispielen 2 und 5 bis 10 erfolgte durch Compoundierung in einem Doppelschneckenextruder der Firma Werner und Pfleiderer.

Die Herstellung der Gemische gemäß den Beispielen 11 und 12 erfolgte durch Zudosierung des Polytetrafluorethylens zu einer Lösung der Komponente A) in $CH_2Cl_2$, inniger Vermischung und Fällung mit Aceton.

Zur Beurteilung der Treibstofffestigkeit wurden Prüfstäbe (nach Spritzgießverfahren hergestellt) der Abmessungen 80 x 10 x 4 mm dem Schablonentest (W. Kaufmann, Bestimmung der Chemikalienbeständigkeit von Kunststoffen unter mechanischer Spannung, Kunststoffe 65 (1976), S. 155 - 157) unterworfen. Dabei wurden Randfaserdehnungen von 1 % eingestellt. Als Prüfflüssigkeit diente gemäß DIN 51 604, Teil 1, eine Mischung aus;

50 Vol.-% Toluol
30 Vol.-% ISO-Octan
15 Vol.-% Diisobutylen
5 Vol.-% Ethanol

Die Prüfung wurde wie folgt durchgeführt:

1. Zyklus

Auf die Biegeschablonen mit aufgebrachter Probe einen mit der Prüfflüssigkeit getränkten Wattebausch gelegt und 15 Minuten einwirken lassen. Probe dann 15 Minuten ablüften lassen.

2. Zyklus:

entspricht dem 1. Zyklus.

Auswertung:

Nach Beendigung des 2. Zyklus wird die von der Schablone genommene Probe mit bloßem Auge betrachtet und wie folgt bewertet:

| Stufe | Merkmal |
|---|---|
| 1 | keine sichtbare Veränderung |
| 2 | Oberfläche vermattet |
| 3 | feine Risse |
| 4 | starke Risse, Bruch |

Unter E-Modul ist der Zug-E-Modul gemäß DIN 53 457 zu verstehen. Er charakterisiert die Steifigkeit.

Zur Messung des Gleitreibungskoeffizienten ng wird mangels DIN-Norm im folgenden das angewandte Meßverfahren selbst beschrieben. Abb. 1 ist eine schematische Darstellung der Meßvorrichtung für den Gleitreibungskoeffizienten ng. In Abb. 1 bedeuten 1 = Gewicht, 2 = Prüfung, 3 = Probe, 4 = Probenhalterung, FN = Normalkraft und FT = Tangentialkraft.

Über ein Stufengetriebe wird ein Reibring aus Stahl (ST 50) mit einem Durchmesser von 85 mm angetrieben. Die Umfangs-, d.h. Reibgeschwindigkeit des Ringes ist in 12 Stufen von 0,065 m/s bis 5,8 m/s einstellbar. Bevorzugt wird die Geschwindigkeit 1 m/s.

Es werden jeweils zwei Messungen mit Reibringen mit einer Rauhigkeit von $R_T$ = 0,8 µm (max. Rauhtiefe)/$R_a$ = 0,2 µm (arithm. Mittelwert) und $R_T$ = 3,1 µm/$R_a$ = 1,5 µm durchgeführt.

Die zu untersuchende Probe mit dem Querschnitt von ca. 4 x 6 mm wird in einem Probenträger eingespannt, der mit einer Kraftmeßflasche verbunden ist, auf die er Zugkräfte ausüben kann. Auf der anderen Seite des Trägers hängen gewichte, die die gewünschte Anpreßkraft der Probe auf den rotierenden Reibring erzeugen. Die Reibkraft steigt mit zunehmender Anpreßkraft und wird durch die Kraftmeßlasche registriert.

Der Reibungskoeffizient ergibt sich aus dem Quotienten von Anpreßkraft (Normalkraft) und Reibkraft (Tangentialkraft): Die Anpreßkraft erzeugt einen Anpreßdruck von 1 N/mm$^2$. bedingt durch die thermischen Eigenschaften von Proben und Meßapparatur sowie Anpreßdruck, Reibungskoeffizient und Umfangsgeschwindigkeit heizt sich die Reibfläche bis zum thermischen Gleichgewicht auf. Diese Temperatur wird durch den Fühler auf der Oberfläche des Reibringes erfaßt. Ein X-Y-Schreiber zeichnet während der i. a. einstündigen Reibversuches den Reibungskoeffizienten als Funktion der Temperatur für eine bestimmte Umfangsgeschwindigkeit auf.

Die Messung der Kerbschlagzähigkeit nach Izod erfolgte gemäß ASTM D 256.

Tabelle 1

| Beispiel Nr. | SiCoPC, Gew.-% | | PC Gew.-% | PTFE, Gew.-% | | | Treibstoff-festigkeit Stufe | E-Modul [MPa] | Gleitreibungskoeffizient; µg | Bei Messung erreichte max. Temp-[°C] | Kerbschlagzähigkeit nach Izod [J/m] bei 23°C |
|---|---|---|---|---|---|---|---|---|---|---|---|
| | I | II | | I | II | III | | | | | |
| 1 * | | | 100 | - | - | - | 4 | 2329 | 0,40 | 40 | 860 |
| 2 * | | | 90 | 10 | - | - | 4 | 2358 | 0,37 | 40 | 463 |
| 3 * | 100 | | - | - | - | - | 4 | 1996 | 0,53 | 48 | 897 |
| 4 * | | 100 | - | - | - | - | 4 | 2008 | 0,55 | 49 | 883 |
| 5 | 93 | | - | 7 | - | - | 2 | 2746 | 0,32 | 40 | 536 |
| 6 | | 93 | - | 7 | - | - | 2 | 2753 | 0,31 | 42 | 489 |
| 7 | 93 | | - | - | 7 | - | 2 | 2739 | 0,31 | 40 | 541 |
| 8 | 93 | | - | - | - | 7 | 2 | 2743 | 0,26 | 38 | 526 |
| 9 | 85 | | - | 15 | - | - | 1 - 2 | 2917 | 0,27 | 35 | 356 |
| 10 | | 85 | - | - | 15 | - | 2 | 2873 | 0,28 | 35 | 374 |
| 11 | 93 | | | 7 | - | - | 2 | 3068 | 0,26 | 34 | 518 |
| 12 | | 93 | | - | 7 | - | 2 | 3107 | 0,27 | 32 | 493 |

Mit Stern versehene Beispiele dienen dem Vergleich

## Ansprüche

1. Mischungen bestehend aus

A) 80 Gew.-% - 99 Gew.-%,

an thermoplastischen Polydiorganosiloxan-Polycarbonat-Blockcopolymeren, mit mittlerem Molekulargewicht $\overline{M}w$ von 10.000 bis 200.000 und mit einem Gehalt an aromatischen Carbonatstruktureinheiten zwischen 70 Gew.-% und 99 Gew.-% und einem Gehalt an Diorganosiloxy-Einheiten zwischen 30 Gew.-% und 1 Gew.-%, wobei die Blockcopolymeren, ausgehend von $\alpha,\omega$-Bishydroxyaryloxy-polydiorganosiloxanen, mit einem Polymerisationsgrad Pn von 5 bis 100 hergestellt werden und

B) 20 Gew.-% bis 1 Gew.-%, an Polytetrafluorethylenpolymerisaten mit einem mittleren Teilchendurchmesser von 0,1 $\mu$m bis 700 $\mu$m und einem $\overline{M}w$ (Zahlenmittelmolekulargewicht) von 4.000 bis 900.000, bezogen auf 100 Gew.-% der Summe der Gewichtsprozente der Komponente A) und B).

2. Mischungen gemäß Anspruch 1, bestehend aus 82 Gew.-% bis 97 Gew.-% an Komponente A) und 18 Gew.-%bis 3 Gew.-% an Komponente B).

3. Mischungen gemäß Anspruch 1, bestehend zusätzlich aus einem Zusatz ausgewählt aus der Gruppe der Stabilisatoren, Pigmente, Fließmittel, Entformungsmittel und Verstärkungsstoffe.

4. Verfahren zur Herstellung der Mischungen des Anspruchs 1, dadurch gekennzeichnet, daß man entweder die Komponenten A) und B) in üblichen Mischaggregaten über die Schmelze der Komponenten A) bei üblichen Temperaturen und Drucken vermischt und isoliert, oder die Komponente A) in Anwesenheit der abzumischenden Menge an Komponente B) synthetisiert und daran anschließend die Komponente A) in üblicher Weise aufarbeitet und isoliert, oder die Komponente B) zu der abzumischenden Menge einer Lösung der Komponente A) in üblichen Lösungsmitteln zudosiert, innig vermischt und anschließend das Gemisch aus A) und B) ausfällt.

5. Verfahren zur Herstellung der Mischungen des Anspruchs 3, gemäß dem Verfahren des Anspruchs 4, dadurch gekennzeichnet, daß man mindestens einen Zusatz auswählt aus der Gruppe der Stabilisatoren, Pigmente, Fließmittel, Entformungsmittel und Verstärkungsstoffe einbezieht.

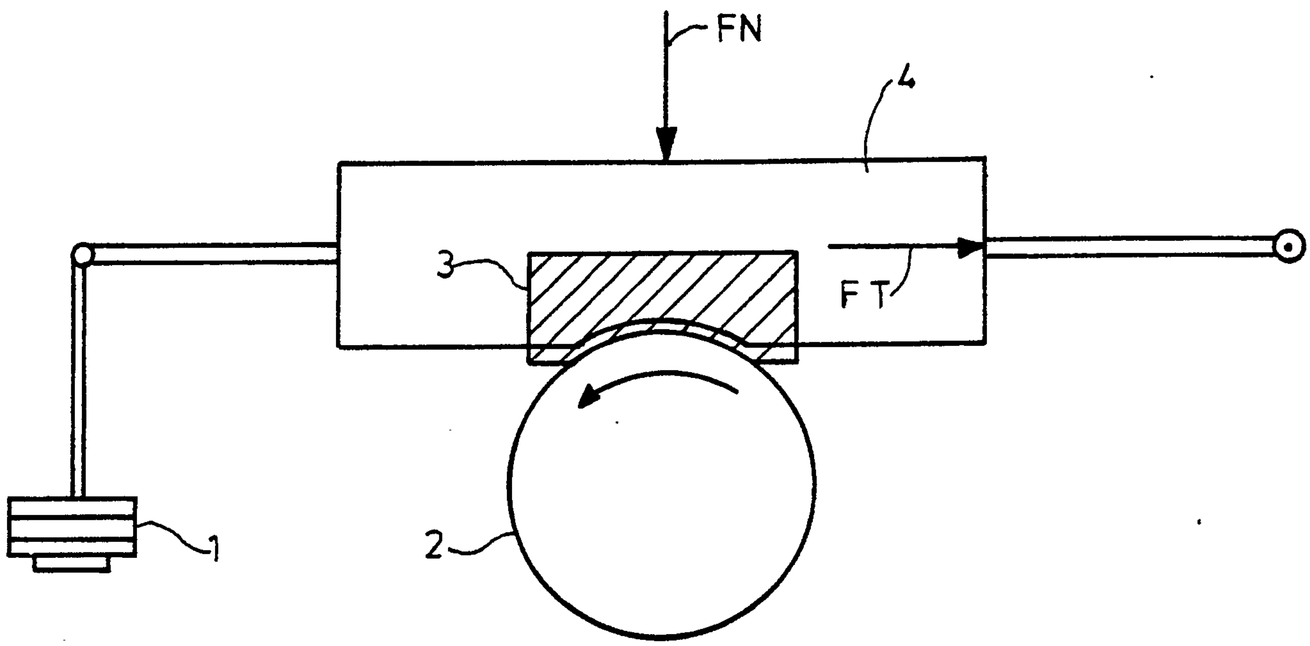


FIG.1